# EUROPÄISCHE PATENTSCHRIFT

(11) **EP 2 520 827 B1**
(45) Veröffentlichungstag und Bekanntmachung des Hinweises auf die Patenterteilung: **30.09.2015**
(21) Anmeldenummer: 12450025.7
(22) Anmeldetag: 26.04.2012
(51) Int. Cl.: F16G 13/20, B66F 3/06

(54) **Hebevorrichtung zum vertikalen Anheben von Lasten**
Lifting device for lifting loads vertically
Dispositif de levage pour le levage vertical de charges

(30) Priorität: 02.05.2011 AT 6102011
(43) Veröffentlichungstag der Anmeldung: 07.11.2012
(73) Patentinhaber: Waagner-Biro Austria Stage Systems AG, 1220 Wien (AT)
(72) Erfinder: Maier, Wolfgang, 92724 Trabitz (DE); Raser, Erich, 2471 Pachfurth (AT)
(74) Vertreter: Miksovsky, Alexander

(56) Entgegenhaltungen:
- EP-A1- 2 386 781
- EP-A2- 0 165 497
- EP-A2- 1 847 729
- EP-A2- 1 859 977
- WO-A1-2009/135508
- DE-A1- 10 103 490
- GB-A- 1 340 546
- US-A- 3 742 775

## Beschreibung

Die vorliegende Erfindung bezieht sich auf eine Hebevorrichtung zum vertikalen Anheben von Lasten, aufweisend eine Hubsäule mit einer Mehrzahl von jeweils gelenkig miteinander verbundenen und in einer vertikalen Hubposition wenigstens teilweise aneinander anliegenden Kettengliedern, wobei die Kettenglieder an einer im wesentlichen parallel zu einer Gelenkachse der gelenkigen Verbindung liegenden Oberfläche eine Profilierung aufweisen, welche mit einem mit einem Ritzel oder dgl. versehenen Antrieb zum Anheben und Absenken der Kettenglieder der Hubsäule zusammenwirkt, wobei die Kettenglieder von einer insbesondere im wesentlichen horizontalen Ruheposition in die vertikale Hubposition durch Beaufschlagung durch den Antrieb umlenkbar sind und wobei benachbarte Kettenglieder in der vertikalen Hubposition miteinander verriegelt bzw. verriegelbar sind, wobei die Kettenglieder von Spindelelementen gebildet oder mit Spindelelementen versehen sind, welche mit dem Antrieb zusammenwirken.

Hebevorrichtungen unter Verwendung von Zahnstangenelementen sind beispielsweise aus der US-A 1,870,244, der DE-A 101 03 490 oder der DE-A 10 2006 059 711 zu entnehmen. Nachteilig bei derartigen Hebevorrichtungen unter Verwendung von Zahnstangenelementen ist insbesondere die einseitige Beaufschlagung durch einen an einer Seite der Zahnstange angeordneten Antrieb, da eine ungleiche bzw. ungleichmäßige Einleitung von Kräften sowohl während des Antriebs zum Heben und Senken der Zahnstange und von dieser gegebenenfalls abgestützten großen Lasten als auch während eines Einsatzes durch die einseitig angeordnete Abstützung des Antriebs vorliegt.

Darüber hinaus sind Hebevorrichtungen der eingangs genannten Art beispielsweise der EP 0 165 497 A2, der EP 1 847 729 A2, der EP 2 386 781 A1, der EP 1 859 977 A2 oder der WO 2009/135508 A1 zu entnehmen, wobei Kettenglieder mit Spindelelementen versehen sind, welche mit dem Antrieb zusammenwirken.

Eine weitere Hebevorrichtung ist beispielsweise der EP-B 1 006 074 zu entnehmen, wobei die Hubsäule aus zwei parallelen, mit Gelenken versehenen Flanken besteht, welche in einer aufwendigen Konstruktion zur Bildung von in einer vertikalen Hubposition wenigstens teilweise aneinander anliegenden Kettengliedern ausgebildet sind. Bei dieser bekannten Hebevorrichtung bzw. diesem bekannten Hubsystem ist insbesondere nachteilig, dass in der aufgerichteten bzw. vertikalen Lage keine Verriegelung benachbarter Kettenglieder vorgesehen ist, so dass zur Vermeidung von Knickbewegungen ein biegesteifer oberer Anschluss der von den Kettengliedern gebildeten Hubsäule mit beispielsweise einer Plattform erforderlich ist. Durch das Fehlen einer Verriegelung sind darüber hinaus Beanspruchungen bzw. Lasten in einer horizontalen Richtung nicht tolerierbar, so dass ein Einsatz derartiger Hebevorrichtungen stark eingeschränkt ist. Darüber hinaus können üblicherweise keine handelsüblichen Bauelemente bzw. Tragmittel zur Herstellung einer derartigen Hebevorrichtung eingesetzt werden.

Die vorliegende Erfindung zielt darauf ab, eine Hebevorrichtung der eingangs genannten Art dahingehend zu verbessern, dass die oben genannten Probleme des Standes der Technik vermieden bzw. weitestgehend reduziert werden und dass insbesondere in der vertikalen bzw. aufgerichteten Lage bzw. Hubposition auch bei gegebenenfalls außermittigen bzw. horizontalen Belastungen bzw. Beanspruchungen eine sichere und zuverlässige Abstützung von Lasten und eine im wesentlichen momentenfreie Lasteinleitung durch die Hebevorrichtung zur Verfügung gestellt wird.

Zur Lösung dieser Aufgaben ist eine Hebevorrichtung der eingangs genannten Art im wesentlichen **dadurch** gekennzeichnet, dass der Antrieb von einem die Spindelelemente umgebenden Schneckenrad gebildet ist. Durch Verwendung von Spindelelementen als Kettenglieder wird insgesamt ein rotationssymmetrisches Hubsystem mit geringer Bauhöhe zur Verfügung gestellt, wobei durch die Spindelelemente, welche im wesentlichen ähnlich einem Gewinde über zumindest einen großen Teil ihres Umfangs mit entsprechenden Eingriffselementen versehen sind, eine symmetrische und momentenfreie Lasteinleitung sowohl während des Hebens und Senkens der von den Kettengliedern bzw. Spindelelementen gebildeten Hubsäule als auch während des Einsatzes zur Abstützung von gegebenenfalls großen Lasten gegeben ist. Durch Vorsehen von Spindelelementen als Kettenglieder ist darüber hinaus das Tragelement selbsthemmend ausgebildet, wobei ergänzend durch die Spindelelemente eine homogene Bewegung möglich wird, während beispielsweise bei bekannten Zahnstangenelementen durch einen Polygoneffekt ungleichmäßige Bewegungen entstehen. Für einen besonders einfachen und zuverlässigen Antrieb der von den Spindelelementen gebildeten Kettenglieder ist erfindungsgemäß vorgesehen, dass der Antrieb von einem die Spindelelemente umgebenden Schneckenrad gebildet ist. Ein derartiges Schneckenrad ist zuverlässig für einen Antrieb bzw. ein Heben und Senken der Spindelelemente ansteuerbar und umgibt die Spindelelemente im wesentlichen über ihren gesamten Umfang, so dass die erwähnte symmetrische und momentenfreie Lasteinleitung in einfacher Weise sichergestellt wird. Durch ein im wesentlichen vollständiges Umgeben der Spindelelemente wird darüber hinaus die selbsthemmende Ausbildung der erfindungsgemäßen Hebevorrichtung unterstützt. Weiters kann durch Vorsehen entsprechender Gegenprofile für das Schneckenrad bzw. den Antrieb über eine entsprechende Höhe auch eine zuverlässige Lasteinleitung bzw. deren Verteilung sichergestellt werden.

Durch den vorgesehenen Einsatz von Spindelelementen als Kettengliedern wird insgesamt eine feststehend geführte knickbare Spindel zur Verfügung gestellt, wobei darüber hinaus vorgesehen ist, dass die segmentierte Spindel bzw. die einzelnen Spindelelemente entsprechend verriegelbar sind. Da benachbarte Kettenglieder in der vertikalen Hubposition miteinander verriegelt bzw. verriegelbar sind, wird im Gegensatz zum bekannten Stand der Technik ein insbesondere bei Auftreten von horizontalen Beanspruchungen bzw. Lasten mögliches Knicken in der aufgerichteten bzw. Hubposition sicher vermieden, so dass darüber hinaus ein Anheben auch von gegebenenfalls größeren Lasten über große Hubhöhen möglich wird. Durch das Verriegeln benachbarter Kettenglieder in der aufgerichteten bzw. vertikalen Hubposition kann somit im Gegensatz zum Stand der Technik auch auf einen biegesteifen Anschluss einer beispielsweise an das oberste Kettenglied anschließenden Plattform verzichtet werden, so dass beispielsweise auch ein schwenkbarer, gegebenenfalls flexibler oberer Traganschluss möglich wird, wie dies nachfolgend im Detail erörtert werden wird. Es lässt sich insgesamt somit durch die erfindungsgemäß vorgesehene Hebevorrichtung ein wesentlich stabileres Hub- bzw. Tragsystem zur Verfügung stellen, bei welchem nicht nur durch die Sicherstellung der vertikalen bzw. aufgerichteten Position durch die erfindungsgemäß vorgesehene Verriegelung eine höhere Lasteinleitung bzw. -aufnahme möglich wird, sondern auch gegebenenfalls auftretende horizontale Lasten bzw. Beanspruchungen sicher aufgenommen werden können. Erfindungsgemäß kann zuverlässig vermieden werden, dass insbesondere durch derartige horizontale Lasten bzw. Beanspruchungen ein Knicken bzw. Verschwenken zwischen benachbarten Kettengliedern in der vertikalen bzw. aufgerichteten Hubposition auftritt, so dass die erfindungsgemäße Hebevorrichtung in beiden horizontalen Achsen die gleiche Last bzw. Belastung übernehmen kann.

Zur weiteren Unterstützung der Verriegelungsposition und zur Sicherstellung einer in der aufgerichteten bzw. vertikalen Lage ordnungsgemäß verriegelten Position benachbarter Kettenglieder ist gemäß einer weiters bevorzugten Ausführungsform vorgesehen, dass eine automatische Verriegelung benachbarter Kettenglieder bei Erreichen der vertikalen Hubposition vorgesehen ist. Derart wird durch ein Anheben bzw. bei einem Ausfahren der Kettenglieder in die aufgerichtete bzw. vertikale Lage automatisch eine Verriegelung zwischen benachbarten Kettengliedern zur Verfügung gestellt.

Für eine weitergehende Automatisierung des Einsatzes der erfindungsgemäßen Hebevorrichtung ist darüber hinaus vorgesehen, dass bei einem Absenken der durch die Kettenglieder gebildeten Hubsäule eine automatische Entriegelung benachbarter Kettenglieder vor dem Umlenken in die im wesentlichen horizontale Ruheposition vorgesehen ist, wie dies einer weiters bevorzugten Ausführungsform der erfindungsgemäßen Hebevorrichtung entspricht. Derart wird nicht nur bei einem Aufrichten bzw. Ausfahren der Kettenglieder in die vertikale Hubposition, wie oben erwähnt, eine selbsttätige bzw. automatische Verriegelung sichergestellt, sondern es kann bei einem Einfahren bzw. Zurückziehen der Kettenglieder in eine im wesentlichen horizontale Warte- bzw. Ruheposition ebenso selbsttätig eine automatische Entriegelung benachbarter Kettenglieder zur Verfügung gestellt werden. In diesem Zusammenhang ist erfindungsgemäß wesentlich, dass eine derartige Entriegelung im wesentlichen in einem entlasteten Zustand benachbarter Kettenglieder vorgenommen wird.

Für eine besonders einfache und zuverlässige Verriegelung benachbarter Kettenglieder zumindest in der vertikalen bzw. aufrechten Hubposition wird gemäß einer weiters bevorzugten Ausführungsform vorgeschlagen, dass benachbarte Kettenglieder in der vertikalen Hubposition über wenigstens einen von einer Stirnfläche eines Kettenglieds vorragenden Fortsatz bzw. Bolzen verriegelt bzw. verbunden sind, welcher in wenigstens eine komplementäre Ausnehmung bzw. Vertiefung in einer daran angrenzenden Stirnfläche des benachbarten Kettenglieds eingreift. Durch einen derartigen Fortsatz bzw. Bolzen an einer Stirnfläche eines Kettenglieds, wobei der wenigstens eine Bolzen bzw. Fortsatz in eine entsprechende bzw. komplementäre Ausnehmung bzw. Vertiefung an der benachbarten Stirnfläche des benachbarten Kettenglieds eingreift, wird eine zuverlässige Verriegelung in der aufrechten bzw. aufgerichteten Position der Kettenglieder zur Verfügung gestellt.

Insbesondere zur Aufnahme entsprechend hoher Lasten wird gemäß einer weiters bevorzugten Ausführungsform vorgeschlagen, dass der wenigstens eine Bolzen sowie die wenigstens eine komplementäre Ausnehmung jeweils in einem Teilbereich der Stirnfläche der Kettenglieder vorgesehen sind, welcher entfernt von der Gelenkachse zur gelenkigen Verbindung der benachbarten Kettenglieder liegt.

Zur Erhöhung der Sicherheit der Verriegelung wird darüber hinaus vorgeschlagen, dass in der vertikalen Hubposition der wenigstens eine Bolzen mit einem Verriegelungsmechanismus zusammenwirkt, welcher vorzugweise in der komplementären Ausnehmung vorgesehen bzw. ausgebildet ist, wie dies einer weiters bevorzugten Ausführungsform der erfindungsgemäßen Hebevorrichtung entspricht.

Für eine automatische Verriegelung benachbarter Kettenglieder wird gemäß einer alternativen Ausführungsform, die nicht Teil der vorliegenden Erfindung ist, vorgeschlagen, dass ein von einem in einer aufgerichteten Position insbesondere an einem oberen Teilbereich eines Kettenglieds schwenkbar angelenkten Hebel gebildetes Verriegelungselement vorgesehen ist, welches nach einem Erreichen der vertikalen Hubposition des Kettenglieds in eine Lage verschwenkbar ist, in welcher es an dem von der Schwenkachse des Hebels abgewandten Ende mit einem beispielweise von einem Fortsatz oder Bolzen gebildeten, komplementären Verriegelungselement zusammenwirkt, welches insbesondere im unteren Teilbereich des benachbarten und vorangehenden Kettenglieds vorgesehen bzw. angeordnet ist. Derart lässt sich durch Ausbildung eines Verriegelungselements als schwenkbar angelenkter Hebel unmittelbar bei einem Ausfahren bzw. Aufrichten der erfindungsgemäßen Hebevorrichtung eine automatische Verriegelung benachbarter Kettenglieder erzielen.

Während für eine Verriegelung zwischen benachbarten Kettengliedern im wesentlichen ein Verriegelungselement ausreichend ist, wird zur gleichmäßigen Lastverteilung und zur Vermeidung von Überbeanspruchungen insbesondere im Bereich des Verriegelungselements vorgesehen, dass miteinander zusammenwirkende Verriegelungselemente an jeweils zwei nach außen gewandten und insbesondere normal auf die Gelenkachse stehenden Oberflächen benachbarter Kettenglieder vorgesehen sind.

Für eine Automatisierung des Verriegelungs- als auch Entriegelungsvorgangs wird darüber hinaus gemäß einer Ausführungsform die nicht Teil der vorliegenden Erfindung ist, vorgeschlagen, dass neben einer an sich bekannten Zwangsführung der Kettenglieder für eine Umlenkung von der insbesondere im wesentlichen horizontalen Ruheposition in die vertikale Hubposition eine Zwangsführung für ein Verriegeln bzw. Entriegeln des wenigstens eines Verriegelungselements vorgesehen ist. Derartige Zwangsführungen können sowohl für die Bewegung der Kettenglieder als auch die Entriegelungs- bzw. Verriegelungsbewegung des wenigstens einen Verriegelungsglieds in einfacher Weise aufeinander abgestimmt werden.

In diesem Zusammenhang wird gemäß einer Ausführungsform, die nicht Teil der vorliegenden Erfindung ist, vorgeschlagen, dass die Zwangsführung von einer Kulisse bzw. Bahn gebildet ist, in welcher ein von dem Verriegelungselement vorragender Mitnehmer geführt ist, dessen Bewegung in der Zwangsführung bei Erreichen der vertikalen Hubposition ein Verschwenken des Verriegelungselements in eine mit dem benachbarten Kettenglied verriegelnde bzw. verriegelte Lage bewirkt. Eine derartige Kulisse bzw. Bahn lässt sich in einfacher und zuverlässiger Weise in den Bereich insbesondere der Umlenkung der Kettenglieder von einer im wesentlichen horizontalen Ruheposition in eine aufgerichtete bzw. vertikale Position integrieren, so dass mit einfachen Mitteln eine zuverlässige automatisierte Verriegelung benachbarter Kettenglieder miteinander und Entriegelung voneinander zur Verfügung gestellt werden kann.

Zur weiteren Flexibilisierung des Einsatzes der erfindungsgemäßen Hebevorrichtung ist gemäß einer weiters bevorzugten Ausführungsform vorgesehen, dass die Teilung der Kettenglieder unabhängig von der Teilung eines Antriebselements wählbar ist.

Wie bereits oben angedeutet, kann bei der erfindungsgemäßen Hebevorrichtung durch die Verriegelung benachbarter Kettenglieder eine verbesserte Kopplung mit einer Plattform bzw. Abstützeinrichtung für eine aufzunehmende bzw. abzustützende Last erzielt werden, wobei gemäß einer weiters bevorzugten Ausführungsform vorgeschlagen wird, dass eine Plattform mit einem obersten bzw. ersten Kettenglied über eine gelenkige Verbindung koppelbar ist. In diesem Zusammenhang wird weiters bevorzugt vorgeschlagen, dass zwischen der Plattform und dem obersten Kettenglied eine Kopplung mit zwei Freiheitsgraden vorgesehen ist.

Die Erfindung wird nachfolgend anhand von in der beiliegenden Zeichnung schematisch dargestellten Ausführungsbeispielen näher erörtert. In dieser zeigen:
Fig. 1 einen Schnitt durch eine erste Ausführungsform einer erfindungsgemäßen Hebevorrichtung unter Verwendung von Spindelelementen als Kettenglieder;
Fig. 2 einen Schnitt entlang der Linie II-II der Fig. 1, wobei insbesondere eine Verriegelung benachbarter Kettenglieder in der aufrechten bzw. vertikalen Position erkennbar ist;
Fig. 3 in einer zu Fig. 1 ähnlichen Darstellung eine teilweise Ansicht einer abgewandelten Ausführungsform einer Hebevorrichtung, wobei Kettenglieder über hebelartige Verriegelungselemente in der aufrechten Lage bzw. Hubposition verriegelbar sind; und
Fig. 4 einen Detailschnitt durch den Bereich zweier benachbarter Kettenglieder, wobei insbesondere die Anordnung der hebelartigen Verriegelungselemente ersichtlich ist.

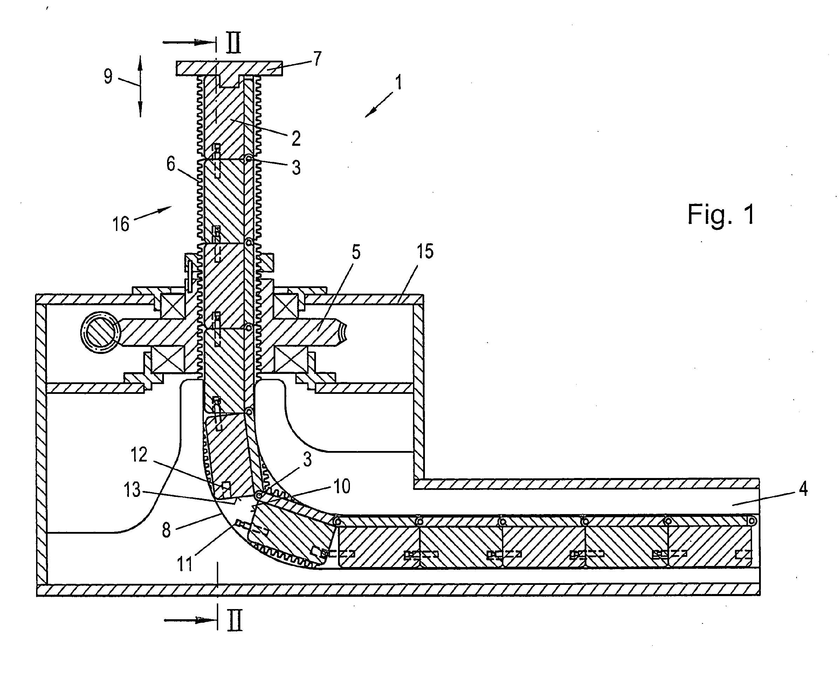

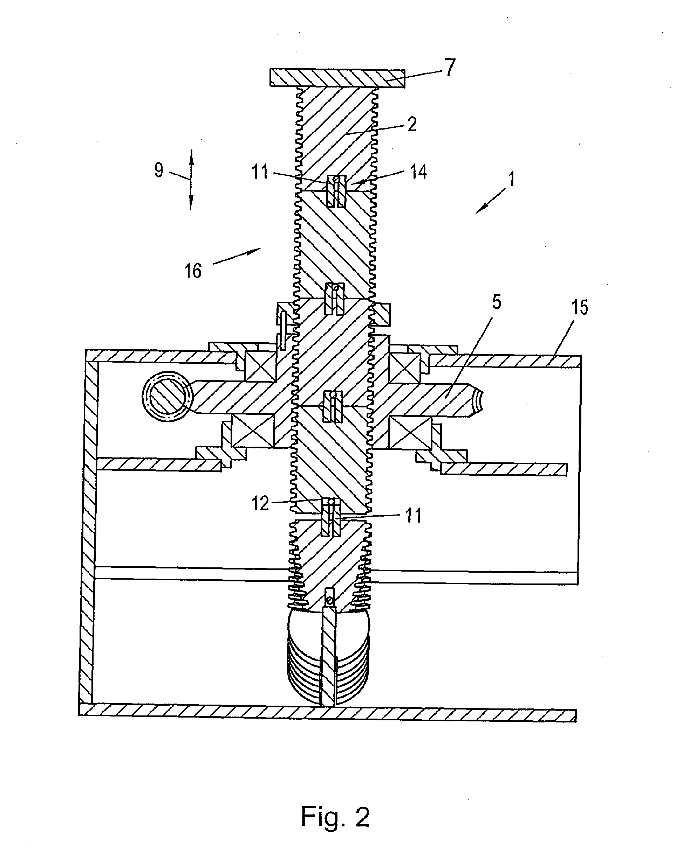

In Fig. 1 und 2 ist allgemein mit 1 eine Hebevorrichtung bezeichnet, wobei eine Mehrzahl von jeweils mit 2 bezeichneten, jeweils von einem Spindelelement gebildeten Kettengliedern vorgesehen ist.

Die benachbarten Spindelelemente bzw. Kettenglieder 2 sind jeweils über ein Gelenk bzw. eine Gelenkachse 3 gelenkig miteinander verbunden, wobei die einzelnen Kettenglieder bzw. Spindelelemente 2 von einer im wesentlichen horizontalen Ruheposition in einem Magazin 4 in eine aufrechte bzw. vertikale Hubposition aufrichtbar sind.

Ein Aufrichten der Spindelelemente bzw. Kettenglieder 2 erfolgt über einen schematisch mit 5 angedeuteten Antrieb beispielsweise in Form eines Schneckenrads, wobei an der Außenseite der Kettenglieder bzw. Spindelelemente 2 vorgesehene Verzahnungen bzw. Profilierungen mit 6 bezeichnet sind. Durch eine entsprechende Höhenerstreckung des Antriebs 5, welcher die Spindelelemente 2 umgibt, werden eine zuverlässige Führung und eine symmetrische momentenfreie Lasteinleitung ermöglicht.

Mit dem obersten Kettenglied bzw. Spindelelement 2 ist schematisch eine Plattform 7 zur Aufnahme bzw. Abstützung einer nicht näher dargestellten Last verbunden.

Aus Fig. 1 ist ersichtlich, dass eine Umlenkung von der im wesentlichen horizontalen Ruheposition der Spindelelemente 2 aus dem Magazin 4 in eine aufrechte bzw. vertikale Hubposition im Bereich einer von einer Zwangsführung 8 gebildeten Umlenkung erfolgt. Entsprechend der gewünschten Höhe der von den Kettengliedern bzw. Spindelelementen 2 gebildeten Hubsäule, welche allgemein mit 16 bezeichnet ist, erfolgt ein Anheben und Absenken der Plattform 7 zur Abstützung der Last, wie dies durch den Doppelpfeil 9 angedeutet ist. Es kann hierbei eine gelenkige Kopplung, insbesondere mit zwei Freiheitsgraden zwischen der Plattform 7 und dem obersten Kettenglied 2 vorgesehen sein.

Um selbst bei einer außermittigen Belastung bzw. einer Beanspruchung in horizontaler Richtung ein Knicken benachbarter Spindelelemente bzw. Kettenglieder 2 zu vermeiden, ist bei der in Fig. 1 und 2 dargestellten Ausführungsform vorgesehen, dass jeweils von einer Stirnfläche 10 eines Kettenglieds 2 in der dargestellten Ausführungsform zwei Fortsätze bzw. Bolzen 11 vorragen, welche zumindest in der aufgerichteten bzw. vertikalen Hubposition der Hebevorrichtung 1 mit an der benachbarten Stirnfläche 13 eines benachbarten Kettenglieds 2 ausgebildeten Ausnehmungen bzw. Vertiefungen 12 zusammenzuwirken bzw. in diese eintreten.

In Fig. 2 ist darüber hinaus ein in aufgerichtetem Zustand mit den Enden der Bolzen bzw. Fortsätze 11 zusammenwirkender Verriegelungsmechanismus 14 in jeder Ausnehmung 12 angedeutet.

Ein selbsttätiges Verriegeln bzw. Eintreten der Bolzen 11 in die jeweilige Ausnehmung 12 erfolgt durch eine Bewegung der Kettenglieder bzw. Spindelelemente 2 im Bereich der Umlenkung bzw. der Zwangsführung 8, wie dies insbesondere aus der Darstellung gemäß Fig. 1 ersichtlich ist.

Zur Aufnahme entsprechender Kräfte bzw. Belastungen insbesondere bei Einsatz von kleinbauenden Verriegelungselementen 11 bzw. 12 ist darüber hinaus ersichtlich, dass sowohl die Bolzen bzw. Fortsätze 11 als auch die damit zusammenwirkenden Vertiefungen bzw. Ausnehmungen 12 in Teilbereichen der Stirnflächen 11 bzw. 13 der Kettenglieder 2 vorgesehen sind, welche von der Gelenkachse 3 zwischen benachbarten Kettengliedern beabstandet bzw. entfernt sind.

In Fig. 1 und 2 ist darüber hinaus für den Antrieb sowie im Bereich der Umlenkung ein Gehäuse 15 schematisch angedeutet.

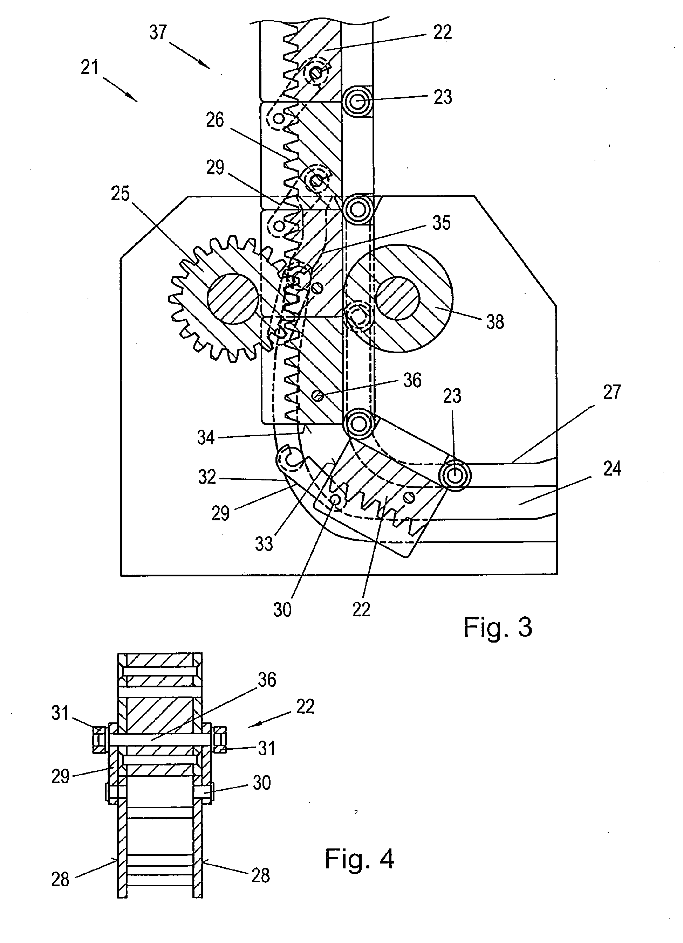

In Fig. 3 ist eine abgewandelte Ausführungsform einer Hebevorrichtung 21 dargestellt, wobei im Gegensatz zu der Ausbildung gemäß Fig. 1 und 2 einzelne Kettenglieder 22 von Zahnstangenelementen gebildet sind. Die benachbarten Kettenglieder 22 sind jeweils wiederum über eine Gelenkachse 23 gelenkig miteinander verbunden, wobei eine Bewegung der Kettenglieder 22 aus einer im wesentlichen horizontalen Ruheposition aus einem schematisch angedeuteten Magazin 24 in eine aufgerichtete bzw. vertikale Hubposition über einen von einem Ritzel 25 gebildeten Antrieb erfolgt. Das Ritzel 25 wirkt hierbei mit einer Profilierung bzw. Verzahnung 26 der Kettenglieder 22 zusammen, wobei eine Abstütz- bzw. Druckrolle mit 38 bezeichnet ist.

Fig. 3 und 4 dienen insbesondere zur detaillierten Darstellung der gegenseitigen Verriegelung benachbarter Kettenglieder 2 bzw. 22 sowie der Führung der einzelnen Kopplungs- bzw. Verriegelungselemente. Die an den Kettengliedern 22 vorgesehenen Kopplungs- und Verriegelungselemente können hierbei in ähnlicher Weise an den in Fig. 1 und 2 gezeigten Spindelelementen 2 vorgesehen bzw. angeordnet sein.

Die Umlenkung von einer im wesentlichen horizontalen Ruheposition in die aufrechte bzw. vertikale Hubposition erfolgt auch bei der Ausführungsform gemäß Fig. 3 über eine Zwangsführung 27, in welcher insbesondere Gelenkbolzen der Gelenkachse 23 geführt sind.

Für eine Verriegelung benachbarter Zahnstangenelemente bzw. Kettenglieder 22 ist bei der Ausführungsform gemäß Fig. 3 und 4 vorgesehen, dass an Außenflächen 28 jeweils eines in der vertikalen Hubposition unteren bzw. nachfolgenden Kettenglieds 22 ein hebelartiges Verriegelungselement 29 um eine Schwenkachse 30 verschwenkbar ist, wobei die Schwenkachse 30 in einem von der Gelenkachse 23 abgewandten oberen Teilbereich dieses Zahnstangenelements bzw. Kettenglieds 22 vorgesehen ist.

Das hebelartige Verriegelungselement 29 weist an seinem von der Gelenkachse 30 abgewandten Ende einen Mitnehmer bzw. eine Rolle 31 auf, welche in einer Zwangsführung 32 im Bereich der Umlenkung von einer horizontalen Ruheposition in eine vertikale Hubposition geführt ist. Über den Mitnehmer 31 erfolgt im Bereich der Einnahme einer vertikalen Hubposition, in welcher Stirnflächen 33 und 34 benachbarter Kettenglieder 22 in Anlage gelangen, durch eine entsprechende Kulisse bzw. gekröpfte Bahn 35 ein Verschwenken des hebelartigen Verriegelungselements 29 in eine Lage, in welcher das freie Ende des von dem Hebel gebildeten Verriegelungselements 29 mit einem Bolzen bzw. einer Achse 36 zusammenwirkt, welche an dem benachbarten Kettenglied ebenfalls im Bereich der Stirnfläche 34 und entfernt von der Gelenkachse 23 vorgesehen ist.

Durch die Zwangsführung 32 sowie den gekröpften bzw. gekrümmten Endbereich der Bahn 35 erfolgt bei einem Ausfahren in die vertikale Hubposition eine automatische bzw. automatisierte und zwangsweise Verriegelung durch einen Eingriff des freien Endes des hebelartigen Verriegelungselements 29 in das komplementäre Verriegelungselement 36 an dem benachbarten Kettenglied 22. Ebenso erfolgt bei einem Zurückziehen in die im wesentlichen horizontale Ruheposition vor einem Umlenken des jeweiligen Kettenglieds 22 ein Lösen der Verriegelung durch den gekrümmten Bereich 35 der Zwangsführung 32.

Aus Fig. 4 ist insbesondere ersichtlich, dass auf beiden Seiten der benachbarten Kettenglieder 22 jeweils ein derartiges Verriegelungselement zur Verriegelung in der aufrechten bzw. vertikalen Hubposition vorgesehen ist.

Es erfolgt somit auch bei der Ausführungsform gemäß Fig. 3 und 4 ein selbsttätiges Verriegeln benachbarter Kettenglieder 22 zumindest in der vertikalen bzw. aufrechten Hubposition, so dass ein Knicken der Hubsäule 37, welche von den Kettengliedern 22 in der aufgerichteten Position gebildet wird, selbst bei außermittigen Beanspruchungen bzw. horizontalen Lasten oder Beanspruchungen sicher vermieden werden kann.

Ein nicht näher dargestelltes oberes Ende der Hubsäule 37 dient beispielsweise, ähnlich wie bei der Ausführungsform gemäß Fig. 1 und 2, zur Kopplung mit einer Plattform zur Aufnahme und Abstützung einer Last.

## Patentansprüche

1. Hebevorrichtung (1) zum vertikalen Anheben von Lasten, aufweisend eine Hubsäule (16) mit einer Mehrzahl von jeweils gelenkig miteinander verbundenen und in einer vertikalen Hubposition wenigstens teilweise aneinander anliegenden Kettengliedern (2), wobei die Kettenglieder (2) an einer im wesentlichen parallel zu einer Gelenkachse (3) der gelenkigen Verbindung liegenden Oberfläche eine Profilierung (6) aufweisen, welche mit einem mit einem Ritzel oder dgl. versehenen Antrieb (5) zum Anheben und Absenken der Kettenglieder (2) der Hubsäule zusammenwirkt, wobei die Kettenglieder (2) von einer insbesondere im wesentlichen horizontalen Ruheposition in die vertikale Hubposition durch Beaufschlagung durch den Antrieb (5) umlenkbar sind und wobei benachbarte Kettenglieder (2) in der vertikalen Hubposition miteinander verriegelt bzw. verriegelbar sind, wobei die Kettenglieder von Spindelelementen (2) gebildet oder mit Spindelelementen versehen sind, welche mit dem Antrieb (5) zusammenwirken, **dadurch gekennzeichnet, dass** der Antrieb von einem die Spindelelemente (2) umgebenden Schneckenrad (5) gebildet ist.

2. Hebevorrichtung nach Anspruch 1, **dadurch gekennzeichnet, dass** eine automatische Verriegelung benachbarter Kettenglieder (2, 22) bei Erreichen der vertikalen Hubposition vorgesehen ist.

3. Hebevorrichtung nach Anspruch 1 oder 2, **dadurch gekennzeichnet, dass** bei einem Absenken der durch die Kettenglieder (2, 22) gebildeten Hubsäule (16, 37) eine automatische Entriegelung benachbarter Kettenglieder (2, 22) vor dem Umlenken in die im wesentlichen horizontale Ruheposition vorgesehen ist.

4. Hebevorrichtung nach Anspruch 1, 2 oder 3, **dadurch gekennzeichnet, dass** benachbarte Kettenglieder (2) in der vertikalen Hubposition über wenigstens einen von einer Stirnfläche (10) eines Kettenglieds (2) vorragenden Fortsatz bzw. Bolzen (11) verriegelt bzw. verbunden sind, welcher in wenigstens eine komplementäre Ausnehmung bzw. Vertiefung (12) in einer daran angrenzenden Stirnfläche (13) des benachbarten Kettenglieds (2) eingreift.

5. Hebevorrichtung nach Anspruch 4, **dadurch gekennzeichnet, dass** der wenigstens eine Bolzen (11) sowie die wenigstens eine komplementäre Ausnehmung (12) jeweils in einem Teilbereich der Stirnfläche (10, 13) der Kettenglieder (2) vorgesehen sind, welcher entfernt von der Gelenkachse (3) zur gelenkigen Verbindung der benachbarten Kettenglieder (2) liegt.

6. Hebevorrichtung nach Anspruch 4 oder 5, **dadurch gekennzeichnet, dass** in der vertikalen Hubposition der wenigstens eine Bolzen (11) mit einem Verriegelungsmechanismus (14) zusammenwirkt, welcher vorzugweise in der komplementären Ausnehmung (12) vorgesehen bzw. ausgebildet ist.

7. Hebevorrichtung nach einem der Ansprüche 1 bis 6 **dadurch gekennzeichnet, dass** die Teilung der Kettenglieder (2, 22) unabhängig von der Teilung eines Antriebselements (5, 25) wählbar ist.

8. Hebevorrichtung nach einem der Ansprüche 1 bis 7,
**dadurch gekennzeichnet, dass** eine Plattform (7) mit einem obersten bzw. ersten Kettenglied (2, 22) über eine gelenkige Verbindung koppelbar ist.

9. Hebevorrichtung nach Anspruch 8, **dadurch gekennzeichnet, dass** zwischen der Plattform (7) und dem obersten Kettenglied (2, 22) eine Kopplung mit zwei Freiheitsgraden vorgesehen ist.

## Claims

1. A device (1) for lifting loads vertically, comprising a lifting column (16) including a plurality of chain links (2) each articulately interconnected and at least partially adjoining in a vertical lifting position, wherein each of the chain links (2) on a surface located substantially parallel with an articulation axis (3) of the articulated connection has a profile (6) cooperating with a drive (5) for lifting and lowering the chain links (2) of the lifting column, which drive is provided with a pinion or the like, wherein the chain links (2) are capable of being deflected from an, in particular, substantially horizontal resting position into the vertical lifting position by being acted upon by the drive (5), and wherein adjacent chain links (2) are locked, or capable of being locked, to each other in the vertical lifting position, wherein the chain links are comprised of, or provided with, spindle elements (2) cooperating with the drive (5), **characterized in that** the drive is comprised of a worm wheel (5) surrounding the spindle elements (2).

2. A lifting device according to claim 1, **characterized in that** the automatic locking of adjacent chain links (2, 22) is provided when reaching the vertical lifting position.

3. A lifting device according to claim 1 or 2, **characterized in that** the automatic unlocking of adjacent chain links (2, 22) prior to their deflection into the substantially horizontal resting position is provided when lowering the lifting column (16, 37) formed by the chain links (2, 22).

4. A lifting device according to claim 1, 2 or 3, **characterized in that** adjacent chain links (2) in the vertical lifting position are locked or interconnected via at least one protrusion or pin (11) projecting from an end face (10) of a chain link (2) and engaging at least one complementary recess or depression (12) provided in an adjoining end face (13) of the adjacent chain link (2).

5. A lifting device according to claim 4, **characterized in that** the at least one pin (11) and the at least one complementary recess (12) are each provided in a subregion of the end face (10, 13) of the chain links (2), which subregion is remote from the articulation axis (3) for articulately connecting the adjacent chain links (2).

6. A lifting device according to claim 4 or 5, **characterized in that** in the vertical lifting position the at least one pin (11) cooperates with a locking mechanism (14) preferably provided or formed in the complementary recess (12).

7. A lifting device according to any one of claims 1 to 6, **characterized in that** the pitch of the chain links (2, 22) is selectable independently of the pitch of a drive element (5, 25).

8. A lifting device according to any one of claims 1 to 7, **characterized in that** a platform (7) is coupleable to an uppermost or first chain link (2, 22) via an articulated connection.

9. A lifting device according to claim 8, **characterized in that** a coupling with two degrees of freedom is provided between the platform (7) and the uppermost chain link (2, 22).

## Revendications

1. Dispositif de levage (1) servant à soulever de manière verticale des charges, présentant une colonne de levage (16) dotée d'une multitude de maillons de chaîne (2) reliés les uns aux autres respectivement de manière articulée et reposant au moins en partie les uns contre autres dans une position relevée verticale, sachant que les maillons de chaîne (2) présentent, au niveau d'une surface située essentiellement de manière parallèle par rapport à un axe d'articulation (3) du système de liaison articulé, un profilage (6), qui coopère avec un entraînement (5) pourvu d'un pignon ou similaire, servant à soulever et à abaisser les maillons de chaîne (2) de la colonne de levage, sachant que les maillons de chaîne (2) peuvent passer sous l'action de la contrainte exercée par l'entraînement (5) d'une position de repos en particulier essentiellement horizontale à la position relevée verticale et sachant que des maillons de chaîne (2) adjacents sont verrouillés ou peuvent être verrouillés les uns aux autres dans la position relevée verticale, sachant que les maillons de chaîne sont formés par des éléments broches (2) ou sont pourvus d'éléments broches, lesquels coopèrent avec l'entraînement (5), **caractérisé en ce que** l'entraînement est formé par une roue à denture hélicoïdale (5) entourant les éléments broches (2).

2. Dispositif de levage selon la revendication 1, **caractérisé en ce qu'**un verrouillage automatique des maillons de chaîne (2, 22) adjacents est prévu une fois la position relevée verticale atteinte.

3. Dispositif de levage selon la revendication 1 ou 2, **caractérisé en ce qu'**un déverrouillage automatique des maillons de chaîne (2, 22) adjacents est prévu avant le passage dans la position de repos essentiellement horizontale lors d'un abaissement de la colonne de levage (16, 37) formée par les maillons de chaîne (2, 22).

4. Dispositif de levage selon la revendication 1, 2 ou 3, **caractérisé en ce que** des maillons de chaîne (2) adjacents sont verrouillés ou sont reliés dans la position relevée verticale par l'intermédiaire au moins d'un prolongement ou d'un goujon (11) dépassant d'une face frontale (10) d'un maillon de chaîne (2), lequel prolongement ou goujon vient en prise avec au moins un évidement ou un creux (12) complémentaire pratiqué dans une face frontale (13) attenante du maillon de chaîne (2) adjacent.

5. Dispositif de levage selon la revendication 4, **caractérisé en ce que** le goujon (11) au moins au nombre de un ainsi que l'évidement (12) complémentaire au moins au nombre de un sont prévus respectivement dans une zone partielle de la face frontale (10, 13) des maillons de chaîne (2), laquelle zone partielle se trouve à distance de l'axe d'articulation (3) par rapport à la liaison articulée des maillons de chaîne (2) adjacents.

6. Dispositif de levage selon la revendication 4 ou 5, **caractérisé en ce que** le goujon (11) au moins au nombre de un coopère, dans la position relevée verticale, avec un mécanisme de verrouillage (14), qui est prévu ou est réalisé de préférence dans l'évidement (12) complémentaire.

7. Dispositif de levage selon l'une quelconque des revendications 1 à 6, **caractérisé en ce que** la répartition des maillons de chaîne (2, 22) peut être choisie indépendamment en fonction de la répartition d'un élément d'entraînement (5, 25).

8. Dispositif de levage selon l'une quelconque des revendications 1 à 7, **caractérisé en ce qu'**une plate-forme (7) peut être couplée par l'intermédiaire d'une liaison articulée à un maillon de chaîne (2, 22) situé tout au-dessus ou à un premier maillon de chaîne.

9. Dispositif de levage selon la revendication 8, **caractérisé en ce qu'**un couplage présentant deux degrés de liberté est prévu entre la plate-forme (7) et le maillon de chaîne (2, 22) situé tout au-dessus.
